(19) **Europäisches Patentamt**
**European Patent Office**
**Office européen des brevets**

(11) **EP 4 624 901 A1**

(12) **EUROPEAN PATENT APPLICATION**
published in accordance with Art. 153(4) EPC

(43) Date of publication:
**01.10.2025   Bulletin 2025/40**

(21) Application number: **23893473.1**

(22) Date of filing: **13.10.2023**

(51) International Patent Classification (IPC):
**G01N 21/31** (2006.01)

(52) Cooperative Patent Classification (CPC):
**G01N 21/31**

(86) International application number:
**PCT/CN2023/124454**

(87) International publication number:
**WO 2024/109381 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2022   CN 202211481280**

(71) Applicant: **GLIT TECHNOLOGIES (SHENZHEN)
PTE LTD
Shenzhen, Guangdong 518110 (CN)**

(72) Inventors:
• **YUAN, Gaoqiang
Shenzhen, Guangdong 518110 (CN)**
• **LIU, Minyu
Shenzhen, Guangdong 518110 (CN)**

(74) Representative: **Kurig, Thomas
Becker Kurig & Partner
Patentanwälte mbB
Bavariastraße 7
80336 München (DE)**

(54) **CABLE JOINT GAS MEASURING DEVICE**

(57)    The present invention discloses a gas measuring device for a cable joint, comprising a light source, an optical gas measuring cell, a photodetector, a control circuit and a processor; measuring light emitted from the light source is conducted into the optical gas measuring cell through an incident optical fiber, the measuring light passing through the optical gas measuring cell is conducted into the photodetector through an exiting optical fiber, the control circuit is connected with the light source, the photodetector and the processor respectively, the control circuit is used for receiving signals generated by the photodetector and providing data to the processor, and the processor is used for calculating a gas concentration at a cable joint. Compared with the prior art, the gas measuring device for a cable joint of the present invention fulfills monitoring of presence of gases at the cable joint or precise measurement of the concentrations of gases by innovating a structure of the gas measuring device for a cable joint, so as to fulfill online detection of a physical state of the cable joint.

Fig. 3

## Description

### Field of invention

The present invention relates to the technical field of optical analyzers, and particularly relates to a gas measuring device for cable joints.

### Background art of the invention

At present, cross-linked polyethylene cables are mainly used in a power supply network, in which a large number of standardized cable joints are used for the convenience of installation. However, due to internal defects of the cable joints, partial discharge will be excited, and insulating materials will be deteriorated by the partial discharge, and generate some gases, such as 2-methylvaleraldehyde, butyraldehyde and methacrolein. In addition to generating some gases, small particles may also be produced during a deterioration process of the insulating materials by the partial discharge. If the partial discharge occurs for a long time, the insulating materials at the cable joints will be damaged, and even an accident will be caused. Therefore, by effectively online and real time monitoring a physical condition of the cable joints, maintenance of the cable joints can be effectively ensured, and a terrible accident can be avoided too. For this reason, it is truly necessary to develop, based on light absorption characteristics of gaseous substances, a gas sensing technology of the cable joints to monitor the physical condition of the cable joints, which is economic, effective, online and real time measuring and suitable for mass-production.

### Disclosure of the invention

In view of this, the purpose of the present invention is to provide a gas measuring device for cable joints. To achieve the above purpose, the technical solution of the present invention is fulfilled as follows:

The present invention adopts the following technical solution: a gas measuring device for cable joints, comprising a light source, an optical gas measuring cell, a photodetector, a control circuit and a processor;

Measuring light emitted from the light source is conducted into the optical gas measuring cell through an incident optical fiber, the measuring light passing through the optical gas measuring cell is conducted into the photodetector through an exiting optical fiber, the control circuit is connected with the light source, the photodetector and the processor respectively, the control circuit is used for receiving signals generated by the photodetector and providing data to the processor, and the processor is used for calculating a gas concentration at a cable joint.

In some embodiments, the gas concentration is:

$$ N = \frac{\mathrm{Log}(\frac{I1}{I2})}{KL} $$

wherein I1 is a light intensity detected by the photodetector when only air exists in the optical gas measuring cell; I2 is a light intensity detected by the photodetector when a gas is measured in the optical gas measuring cell, K is an absorption coefficient, and L is an effective length of the optical gas measuring cell.

In some embodiments, a reference photodetector is put between the light source and the control circuit, which is used as a reference to eliminate an error being caused by a fluctuation of the light source.

In some embodiments, the gas concentration is:

$$ N = \frac{\mathrm{Log}(\frac{I1 - I3}{I2 - I3})}{KL} $$

wherein I1 is a light intensity detected by the photodetector when only air exists in the optical gas measuring cell; I2 is a light intensity detected by the photodetector when a gas is measured in the optical gas measuring cell, I3 is a reference light intensity detected by the reference photodetector, K is an absorption coefficient, and L is an effective length of the optical gas measuring cell.

In some embodiments, the optical gas measuring cell comprises a main body, an end cover and gas holes; the incident optical fiber is fixed in an extension part of the end cover, the exiting optical fiber is fixed in an extension part of the main body, and gases generated at the cable joint diffuse into the optical gas measuring cell through the gas holes.

In some embodiments, the main body and the end cover are coaxial.

In some embodiments, the optical gas measuring cell is sealed together with the cable joint after being assembled, and the optical gas measuring cell and the cable joint are wrapped by an outer cladding.

In some embodiments, the cable joint is a joint connecting a first cable and a second cable, and an insulating sleeve is covered at the cable joint.

In some embodiments, the incident optical fiber and the exiting optical fiber are assembled on the same side or different sides of the optical gas measuring cell.

In some embodiments, the light source comprises a measuring light source and a reference light source.

Compared with the prior art, the gas measuring device for a cable joint of the present invention fulfills monitoring of presence of gases at the cable joint or precise measurement of the concentrations of gases by innovating a structure of the gas measuring device for a cable joint, so as to fulfill online detection of a physical state of the cable joint.

**Description of the drawings**

To more clearly describe the technical solution in the embodiments of the present application, the drawings needed to be used in the embodiments of the present application are described below.

Fig. 1 is a schematic diagram of a gas measuring device for a cable joint provided in an embodiment of the present invention;
Fig. 2 is a schematic diagram of another gas measuring device for a cable joint provided in an embodiment of the present invention;
Fig. 3 is a schematic diagram of an optical gas measuring cell in a gas measuring device for a cable joint provided in an embodiment of the present invention;
Fig. 4 is a schematic diagram of a gas measuring device for a cable joint assembled at a cable joint provided in an embodiment of the present invention;
Fig. 5 is another schematic diagram of an optical gas measuring cell in a gas measuring device for a cable joint provided in an embodiment of the present invention;
Fig. 6 is a schematic diagram of still another gas measuring device for a cable joint provided in an embodiment of the present invention;
Fig. 7 is a schematic diagram of another optical gas measuring cell provided in an embodiment of the present invention.

Reference signs:

101. light source; 102. incident optical fiber; 103. optical gas measuring cell; 104. exiting optical fiber; 105. photodetector; 106. control circuit; 107. processor; 108. display; 201. incident end cover; 202. incident collimating lens; 203. main body of strengthened optical gas measuring cell; 204. strengthened strip; 205. exiting collimating lens; 206. exiting end cover; 301. main body of the optical gas measuring cell; 302. end cover of the optical gas measuring cell; 303. gas hole; 401. first cable; 402. second cable; 403. insulating sleeve; 404. outer cladding; 501. main body of the optical gas measuring cell using reflection; 502. single-surface reflector; 503. end cover fixing optical fiber; 504. incident light; 505. reflected light; 601. measuring light source; 602. reference light source; 603. Y-type optical fiber; 604. first optical fiber; 605. second optical fiber; 606. third optical fiber;

**Detailed description of the invention**

To make the purpose, the technical solution and the advantages of the present invention more clear, the present invention will be further described below in detail in combination with the drawings and the embodiments. It should be understood that the specific embodiments described herein are only used for explaining the present invention, not used for limiting the present invention.

Terms such as "first" and "second" in the embodiments of the present invention are only used for distinguishing relevant technical features and do not indicate a sequence. It shall be understood that such data may be exchanged under appropriate circumstances so as to describe the embodiments of the present application. Moreover, terms of "comprise" and "have" as well as any other variant are intended to cover non-exclusive inclusion, for example, processes, methods, systems, products or devices including a series of steps or units are not limited to those steps or units clearly listed, but include other steps or units that are not listed clearly or are inherent to these processes, methods, products or devices.

In the present application, terms such as "upper", "lower", "inner", "middle", "outer", "front" and "rear" indicate direction or position relationships shown based on the drawings. These terms are mainly intended to better describe the present application and embodiments and not intended to limit that the devices, elements or components indicated must have a specific direction or must be constructed and operated in a specific direction.

Moreover, part of the above terms may be used for indicating other meanings in addition to the direction or position relationships. For example, the term "up" may also be used for indicating a dependency relationship or connection relationship in some cases. For those ordinary skilled in the art, the specific meanings of these terms in the present application may be understood according to concrete conditions.

In addition, terms such as "assembly", "arrange", "connect" and "fix" shall be understood in a broad sense. For example, "connect" may refer to fixed connection, detachable connection or an integral structure; may refer to mechanical connection or electrical connection; and may refer to direct connection or indirect connection through an intermediate medium or inner communication of two devices, elements or components.

To make the purpose, the technical solution and the advantages of the present invention more clear, the present invention will be further described below in detail in combination with the drawings and the embodiments. It should be understood that the specific embodiments described herein are only used for explaining the present invention, not used for limiting the present invention.

Embodiment 1

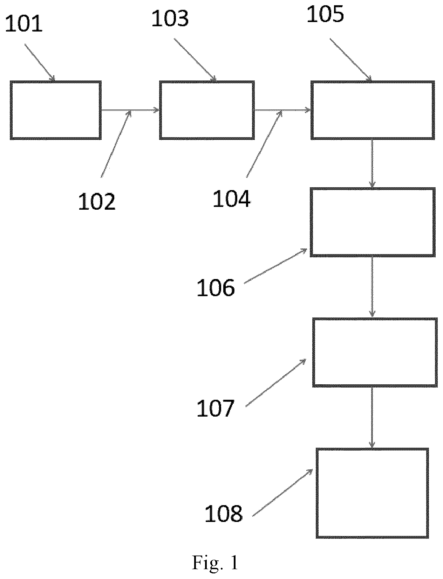

The embodiment of the present invention provides a gas measuring device for a cable joint, as shown in Fig. 1, comprising a light source 101, an optical gas measuring cell 103, a photodetector 105, a control circuit 106 and a processor 107;

Measuring light emitted by the light source 101 is conducted into the optical gas measuring cell 103 through an incident optical fiber 102, the measuring light passing through the optical gas measuring cell 103 is conducted into the photodetector 105 through an exiting optical fiber 104, the control circuit 106 is connected with the light source 101, the photodetector 105 and the processor 107 respectively, the control circuit 106 is used for receiving signals generated by the photodetector 105 and providing data to the processor 107, and the processor 107 is used for calculating a gas concentration at a cable joint.

More specifically, the light source 101 is used for emitting the measuring light; the measuring light is conducted into the optical gas measuring cell 103 by the incident optical fiber 102; the optical gas measuring cell 103 is used for collecting a gas measured at the cable joint and fulfilling measurement of the gases; the measuring light passing through the optical gas measuring cell 103 is conducted into the photodetector 105 by the exiting optical fiber 104; the measuring light is converted into an electronic signal by the photodetector 105; the control circuit 106 is used for controlling the light source 101, controlling the photodetector 105, receiving and processing the signals outputting from the photodetector 105, providing communication with the processor 107, providing data such as a measuring light intensity to the processor 107, and so on; the processor 107 is used for running the software to control the gas measuring device for a cable joint and calculating the concentrations of gases at the cable joint. The light source 101 can be an LED, a xenon lamp, a deuterium lamp, a tungsten lamp etc. The photodetector 105 can be a photocell with single pixel silicon, a multi-pixel CCD, a multi-pixel CMOS, a spectrometer etc. The processor 107 can be an intelligent terminal such as a computer; the processor 107 can also comprise a screen which is used for displaying and inputting commands. Of course, the screen can also be provided separately according to actual needs.

More specifically, the gas concentration is:

$$N = \frac{\text{Log}(\frac{I1}{I2})}{KL}$$

wherein I1 is a light intensity detected by the photodetector when only air exists in the optical gas measuring cell; I2 is a light intensity detected by the photodetector when a gas is measured in the optical gas measuring cell, K is an absorption coefficient, and L is an effective length of the optical gas measuring cell. K is obtained through calibration using a standard gas.

Due to absorption of the gas measured, I2 is less than I1; based on the Beer-Lambert Law of absorption and in combination with the gas measuring device for a cable joint of the embodiment of the present invention, a calculation method for the above-mentioned gas concentration can be obtained.

Compared with the prior art, the gas measuring device for cable joints provided by the embodiment of the present invention fulfills monitoring of presence of gas at the cable joint or precise measurement of the gas concentration by innovating a structure of the gas measuring device for a cable joint, so as to fulfil online detection of a physical state of the cable joint.

Embodiment 2

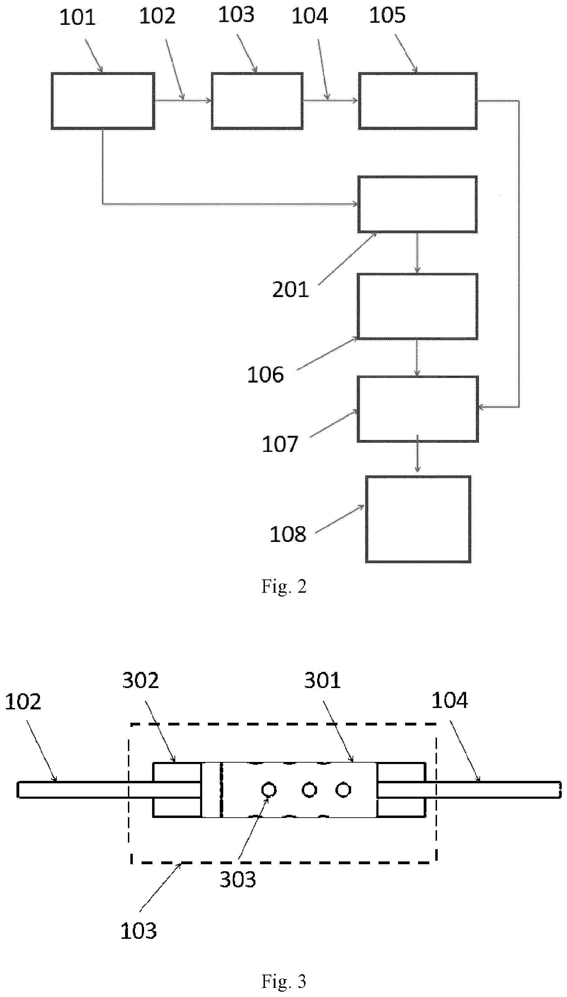

The embodiment of the present invention provides a gas measuring device for a cable joint, as shown in Fig. 2, comprising a light source 101, an optical gas measuring cell 103, a photodetector 105, a control circuit 106 and a processor 107;

Measuring light emitted by the light source 101 is conducted into the optical gas measuring cell 103 through an incident optical fiber 102, the measuring light passing through the optical gas measuring cell 103 is conducted into the photodetector 105 through an exiting optical fiber 104, the control circuit 106 is connected with the light source 101, the photodetector 105 and the processor 107 respectively, the control circuit 106 is used for receiving signals generated by the photodetector 105 and providing data to the processor 107, and the processor 107 is used for calculating a gas concentration at a cable joint.

A reference photodetector 105 is put between the light source 101 and the control circuit 106, which is used as a reference to eliminate an error being caused by a fluctuation of the light source 101.

When I3 is a reference light intensity of the reference photodetector 105, the formula of the gas concentration in embodiment 1 can be corrected to:

$$N = \frac{\text{Log}(\frac{I1 - I3}{I2 - I3})}{KL}$$

wherein I1 is a light intensity detected by the photodetector when only air exists in the optical gas measuring cell; I2 is a light intensity detected by the photodetector when a gas is measured in the optical gas measuring cell, I3 is the reference light intensity of the reference photodetector, K is an absorption coefficient, and L is an effective length of the optical gas measuring cell.

Compared with the prior art, the gas measuring device for a cable joint provided by the embodiment of the present invention fulfills monitoring of presence of gas at the cable joint or precise measurement of the gas concentration by innovating a structure of the gas measuring device for a cable joint, so as to fulfill online detection of a physical state of the cable joint. Especially, the error caused by the fluctuation of the light source can be eliminated by the gas measuring device for a cable joint of the embodiment.

Embodiment 3

The embodiment of the present invention provides a gas measuring device for a cable joint, comprising a light source 101, an optical gas measuring cell 103, a photodetector 105, a control circuit 106 and a processor 107;

Measuring light emitted from the light source 101 is conducted into the optical gas measuring cell 103 through an incident optical fiber 102, the measuring light passing through the optical gas measuring cell 103 is conducted into the photodetector 105 through an exiting optical fiber 104, the control circuit 106 is connected with the light source 101, the photodetector 105 and the processor 107 respectively, the control circuit 106 is used for receiving signals generated by the photodetector 105 and providing data to the processor 107, and the processor 107 is used for calculating a gas concentration at a cable joint.

The optical gas measuring cell 103 in the embodiment of the present invention is shown in Fig. 3,

More specifically, the optical gas measuring cell 103 comprises a main body 301, an end cover 302 and gas holes 303; the incident optical fiber 102 is fixed in an extension part of the end cover, and the exiting optical fiber 104 is fixed in an extension part of the main body. In this way, it is possible to avoid damage to the two optical fibers.

Gases generated at the cable joint diffuse into the optical gas measuring cell 103 through the gas holes 303 for gases monitoring.

More specifically, the main body 301 and the end cover 302 are coaxial to ensure optical coaxiality of the incident optical fiber 102 and the exiting optical fiber 104. All materials of the optical gas measuring cell 103 are high voltage insulating and resistant materials.

Compared with the prior art, the gas measuring device for a cable joint provided by the embodiment of the present invention fulfills monitoring of presence of gas at the cable joint or precise measurement of the gas concentration by innovating a structure of the gas measuring device for a cable joint, so as to fulfil online detection of a physical state of the cable joint. Especially, the main body and the end cover of the embodiment are coaxial to ensure optical coaxiality of the incident optical fiber 102 and the exiting optical fiber 104. Gases generated at the cable joint diffuse into the optical gas measuring cell 103 through the gas holes for gas monitoring.

Embodiment 4

The embodiment of the present invention provides a gas measuring device for a cable joint, comprising a light source 101, an optical gas measuring cell 103, a photodetector 105, a control circuit 106 and a processor 107;

Measuring light emitted from the light source 101 is conducted into the optical gas measuring cell 103 through an incident optical fiber 102, the measuring light passing through the optical gas measuring cell 103 is conducted into the photodetector 105 through an exiting optical fiber 104, the control circuit 106 is connected with the light source 101, the photodetector 105 and the processor 107 respectively, the control circuit 106 is used for receiving signals generated by the photodetector 105 and providing data to the processor 107, and the processor 107 is used for calculating a gas concentration at a cable joint.

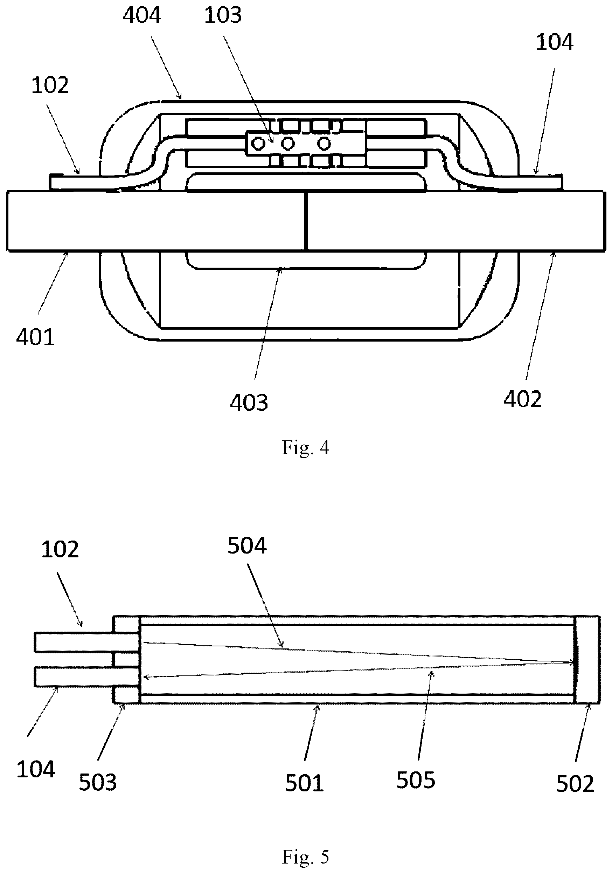

Fig. 4 is a schematic diagram of the optical gas measuring cell 103 assembled at the cable joint of the embodiment of the present invention, which comprises a first cable 401, a second cable 402, an insulating sleeve 403 of the cable joint and an outer cladding 404 of the cable joint. The first cable 401 and the second cable 402 are connected, and the insulating sleeve 403 of the cable joint is made of an organic semiconductor material and has a shielding effect at the cable joint. After being exposed to a high voltage for a long time, the insulating sleeve 403 of the cable joint may be damaged and release certain gases, such as 2-methylvaleraldehyde, butyraldehyde and methacrolein. By monitoring the presence and concentration of the gases, a physical condition of the cable joint can be detected to determine whether to replace the insulating sleeve 403 of the cable joint, or repair the first cable 401 or the second cable 402.

In this way, the optical gas measuring cell 103 is sealed together with the cable joint after being assembled, and the optical gas measuring cell 103 and the cable joint are wrapped by the outer cladding 404.

More specifically, the cable joint is a joint connecting the first cable 401 and the second cable 402, and the insulating sleeve 403 is covered at the joint.

Compared with the prior art, the gas measuring device for a cable joint provided by the embodiment of the present invention fulfills monitoring of presence of gases at the cable joint or precise measurement of the concentrations of gases by innovating a structure of the gas measuring device for a cable joint, so as to fulfil online detection of a physical state of the cable joint.

Embodiment 5

The embodiment of the present invention provides a gas measuring device for a cable joint, comprising a light source 101, an optical gas measuring cell 103, a photodetector 105, a control circuit 106 and a processor 107;

Measuring light emitted from the light source 101 is conducted into the optical gas measuring cell 103 through an incident optical fiber 102, the measuring light passing through the optical gas measuring cell 103 is conducted into the photodetector 105 through an exiting optical fiber 104, the control circuit 106 is connected with the light source 101, the photodetector 105 and the processor 107 respectively, the control circuit 106 is used for receiving signals generated by the photodetector 105 and providing data to the processor 107, and the processor 107 is used for calculating a gas concentration at a cable joint.

More specifically, the incident optical fiber 102 and the exiting optical fiber 104 are assembled on the same side or different sides of the optical gas measuring cell 103.

Fig. 5 is a schematic diagram of the optical gas measuring cell 103 of a single-surface reflecting type, which comprises a main body 501 of the optical gas measuring cell using reflection, a single-surface reflector 502, an end cover fixing optical fiber 503, incident light 504 and reflected light 505. In this way, the incident optical fiber 102 and the exiting optical fiber 104 can be connected from one side, which is convenient for installation and use.

Compared with the prior art, the gas measuring device for a cable joint of the present invention fulfills monitoring of presence of gas at the cable joint or precise measurement of the gas concentration by innovating a structure of the gas measuring device for a cable joint, so as to fulfill online detection of a physical state of the cable joint. The incident optical fiber 102 and the exiting optical fiber 104 can be connected from one side, which is convenient for installation and use.

Embodiment 6

The embodiment of the present invention provides a gas measuring device for a cable joint, comprising a light source 101, an optical gas measuring cell 103, a photodetector 105, a control circuit 106 and a processor 107;
More specifically, the light source 101 comprises a measuring light source 601 and a reference light source 602.

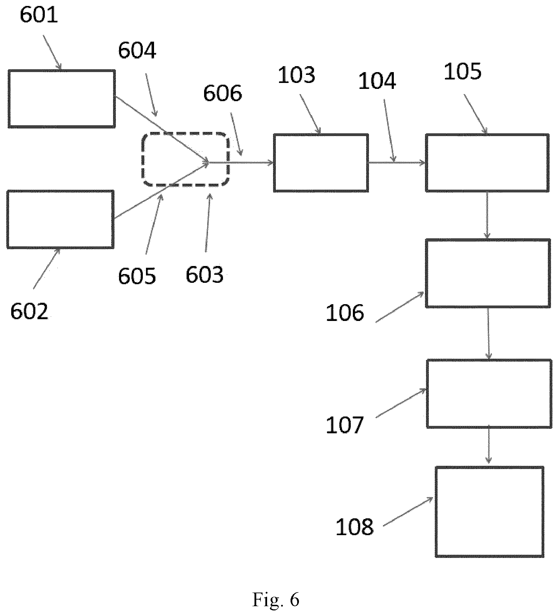

Fig. 6 is a schematic diagram of the gas measuring device for a cable joint with dual light sources, which comprises the measuring light source 601, the reference light source 602 and a Y-type optical fiber 603. More specifically, the Y-type optical fiber 603 comprises a first optical fiber 604, a second optical fiber 605 and a third optical fiber 606. The measuring light source 601 is connected with the first optical fiber 604, the reference light source 602 is connected with the second optical fiber 605, and reference light and measuring light are conducted into the optical gas measuring cell using the third optical fiber 606. The measuring light source 601 and the reference light source 602 take turn to emit light; wavelength of light emitted from the measuring light source 601 is used as an absorption wavelength to detect presence of gases, and wavelength of light emitted from the reference light source 602 is only used as a reference wavelength due to the fact that the light is not absorbed by the gases. Therefore, concentration of a gas measured is analyzed based on a signal difference between the light emitted from the measuring light source 601 and the light emitted from the reference light source 602 detected by the photodetector 105.

Compared with the prior art, the gas measuring device for a cable joint of the present invention fulfills monitoring of presence of gases at the cable joint or precise measurement of the concentrations of gases by innovating a structure of the gas measuring device for a cable joint, so as to fulfill online detection of a physical state of the cable joint. Concentration of a gas measured is analyzed based on a signal difference between the light emitted from the measuring light source and the light emitted from the reference light source which are detected by the photodetectors.

Embodiment 7

The embodiment of the present invention provides a gas measuring device for a cable joint, comprising a light source 101, an optical gas measuring cell 103, a photodetector 105, a control circuit 106 and a processor 107;

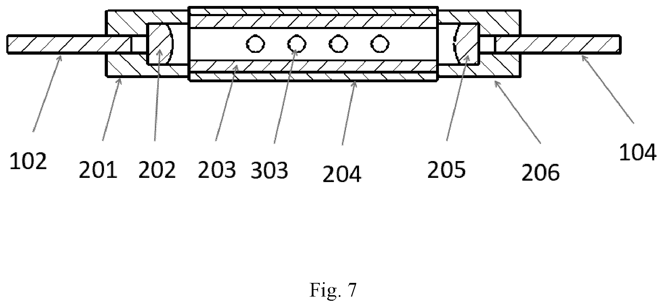

Fig. 7 is a schematic diagram of a strengthened optical gas measuring cell provided by the embodiment of the present invention, which comprises an incident end cover 201, an incident collimating lens 202, a main body 203 of the strengthened optical gas measuring cell, a strengthened strip 204, an exiting collimating lens 205 and an exiting end cover 206.

Measuring light is conducted into the incident collimating lens 202 of the strengthened optical gas measuring cell through an incident optical fiber 102, and emits towards the exiting collimating lens 205 of the strengthened optical gas measuring cell after being collimated by the incident collimating lens 202, and further conducted into an exiting optical fiber 104 after being focused by the exiting collimating lens 205; the incident collimating lens 202 of the strengthened optical gas measuring cell is fixed in the incident end cover 201 of the strengthened optical gas measuring cell, the exiting collimating lens 205 of the strengthened optical gas measuring cell is fixed in the exiting end cover 206 of the strengthened optical gas measuring cell, the two end covers are fixed at both ends of the main body 203 of the strengthened optical gas measuring cell respectively, and it is ensured that the incident optical fiber 102, the incident collimating lens 202 of the strengthened optical gas measuring cell, the exiting collimating lens 205 of the strengthened optical gas measuring cell and the exiting optical fiber 104 are coaxial. The strengthened strip 204 of the strengthened optical gas measuring cell is fixed in the main body of the strengthened optical gas measuring cell to strengthen mechanical stability of the main body and ensure that the main body will not be deformed. If deformation occurs, collimation of an overall optical path will be affected, and thereby intensity of signals received will be affected as well. All materials of the strengthened optical gas measuring cell are high voltage insulating and resistant materials.

Compared with the prior art, the gas measuring device for a cable joint of the present invention fulfills monitoring of presence of gases at the cable joint or precise measurement of the gas concentration by innovating a structure of the gas measuring device for a cable joint, so as to fulfill online detection of a physical state of the cable joint. Concentration of a gas measured is analyzed based on a signal difference between the light emitted from the measuring light source and the light emitted from the reference light source which are detected by the photodetectors.

The above only describes preferred specific embodiments of the present invention, but the protection scope of the present invention is not limited thereto. Any change or replacement contemplated easily by those skilled in the art familiar with the technical field within the technical scope disclosed by the present invention shall be covered within the protection scope of the present invention. Therefore, the protection scope of the present invention should be determined by the protection scope of the claims.

**Claims**

1. A gas measuring device for a cable joint, **characterized in** comprising a light source, an optical gas measuring cell, a photodetector, a control circuit and a processor;
   Measuring light emitted from the light source is conducted into the optical gas measuring cell through an incident optical fiber, the measuring light passing through the optical gas measuring cell is conducted into the photodetector through an exiting optical fiber, the control circuit is connected with the light source, the photodetector and the processor respectively, the control circuit is used for receiving signals generated by the photodetector and providing data to the processor, and the processor is used for calculating a gas concentration at a cable joint.

2. The gas measuring device for cable joints as claimed in claim **1, characterized in that** gas concentration is:

$$N = \frac{Log(\frac{I1}{I2})}{KL}$$

   wherein I1 is a light intensity detected by the photodetector when only air exists in the optical gas measuring cell; I2 is a light intensity detected by the photodetector when a gas is measured in the optical gas measuring cell, K is an absorption coefficient, and L is an effective length of the optical gas measuring cell.

3. The gas measuring device for a cable joint as claimed in claim 1, **characterized in that** a reference photodetector is put between the light source and the control circuit, which is used as a reference to eliminate an error being caused by a fluctuation of the light source.

4. The gas measuring device for a cable joint as claimed in claim 3, **characterized in that** the gas concentration is:

$$N = \frac{Log(\frac{I1 - I3}{I2 - I3})}{KL}$$

   wherein I1 is a light intensity detected by the photodetector when only air exists in the optical gas measuring cell; I2 is a light intensity detected by the photodetector when a gas is measured in the optical gas measuring cell, I3 is a reference light intensity detected by the reference photodetector, K is an absorption coefficient, and L is an effective length of the optical gas measuring cell.

5. The gas measuring device for a cable joint as claimed in any one of claims 1-4, **characterized in that** the optical gas measuring cell comprises a main body, an end cover and gas holes;
   the incident optical fiber is fixed in an extension part of the end cover, the exiting optical fiber is fixed in an extension part of the main body, gases generated at the cable joint diffuse into the optical gas measuring cell through the gas holes, the optical gas measuring cell is made of high voltage insulating and resistant materials, and the main body and the end cover are coaxial.

6. The gas measuring device for a cable joint as claimed in any one of claims 1-4, **characterized in that** the optical gas measuring cell is sealed together with the cable joint after being assembled, and the optical gas measuring cell and the cable joint are wrapped by an outer cladding.

7. The gas measuring device for a cable joint as claimed in claim 6, **characterized in that** the cable joint is a joint connecting a first cable and a second cable, and an insulating sleeve is covered at the cable joint.

8. The gas measuring device for a cable joint as claimed in any one of claims 1-4, **characterized in that** the incident optical fiber and the exiting optical fiber are assembled on the same side or different sides of the optical gas measuring cell.

9.  The gas measuring device for a cable joint as claimed in any one of claims 1-4, **characterized in that** the light source comprises a measuring light source and a reference light source.

10. The gas measuring device for a cable joint as claimed in any one of claims 1-4, **characterized in that** the optical gas measuring cell comprises: an incident collimating lens being fixed in an incident end cover of the optical gas measuring cell, an exiting collimating lens being fixed in an exiting end cover of the optical gas measuring cell, and a strengthened strip being fixed in the main body of the optical gas measuring cell.

Fig. 1

Fig. 2

Fig. 3

404    103

102        104

401

403        402

Fig. 4

102        504

104   503        501        505        502

Fig. 5

Fig. 6

Fig. 7

## INTERNATIONAL SEARCH REPORT

<table>
<tr><td colspan="2">International application No.</td></tr>
<tr><td colspan="2"><strong>PCT/CN2023/124454</strong></td></tr>
</table>

| A. | CLASSIFICATION OF SUBJECT MATTER |
| --- | --- |

G01N21/31(2006.01)i

According to International Patent Classification (IPC) or to both national classification and IPC

| B. | FIELDS SEARCHED |
| --- | --- |

Minimum documentation searched (classification system followed by classification symbols)

IPC: G01N21

Documentation searched other than minimum documentation to the extent that such documents are included in the fields searched

Electronic data base consulted during the international search (name of data base and, where practicable, search terms used)

CNTXT, CNABS, CNKI, 万方, WANFANG: 电缆, 线缆, 放电, 绝缘, 接头, 气, 光纤, 池, 室; USTXT, WOTXT, EPTXT, VEN, Web of Science: cable, discharge, insulation, joint, gas, optical fiber, cell, chamber

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110398671 A (SHENZHEN POWER SUPPLY BUREAU CO., LTD.) 01 November 2019 (2019-11-01)<br>description, paragraphs 65-86, and figures 1-8 | 1-10 |
| X | 赵法强 等 (ZHAO, Faqiang et al.). "XLPE电缆中间接头局部放电特征气体及光特性检测技术研究 (Investigation on Partial Discharge Characteristic Gas in XLPE Cable Intermediate Joint and Detection Technology of Light-level)"<br>广东电力 (Guangdong Electric Power),<br>Vol. 32, No. 12, 31 December 2019 (2019-12-31), pages 130-136<br>section 3 | 1-10 |
| PX | CN 116148183 A (SHENZHEN POWER SUPPLY BUREAU CO., LTD.) 23 May 2023 (2023-05-23)<br>description, paragraphs 43-95, and figures 1-7 | 1-10 |
| A | CN 115343583 A (ZHUJI POWER SUPPLY COMPANY OF STATE GRID ZHEJIANG ELECTRIC POWER CO., LTD. et al.) 15 November 2022 (2022-11-15)<br>entire document | 1-10 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 January 2024** | **24 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 624 901 A1**

## INTERNATIONAL SEARCH REPORT

<table>
<tr><td colspan="2">International application No.</td></tr>
<tr><td colspan="2"><strong>PCT/CN2023/124454</strong></td></tr>
</table>

### C. DOCUMENTS CONSIDERED TO BE RELEVANT

| Category* | Citation of document, with indication, where appropriate, of the relevant passages | Relevant to claim No. |
|---|---|---|
| A | CN 1952646 A (BEIJING INSTITUTE OF TECHNOLOGY) 25 April 2007 (2007-04-25)<br>    entire document | 1-10 |
| A | CN 111122442 A (GLIT TECHNOLOGIES (SHENZHEN) PTE. LTD.) 08 May 2020 (2020-05-08)<br>    entire document | 1-10 |
| A | US 2018011007 A1 (BLUEPOINT MEDICAL GMBH & CO. KG) 11 January 2018 (2018-01-11)<br>    entire document | 1-10 |

Form PCT/ISA/210 (second sheet) (July 2022)

**INTERNATIONAL SEARCH REPORT**
Information on patent family members

International application No.

**PCT/CN2023/124454**

| Patent document cited in search report | | | Publication date (day/month/year) | Patent family member(s) | | | Publication date (day/month/year) |
|---|---|---|---|---|---|---|---|
| CN | 110398671 | A | 01 November 2019 | CN | 110398671 | B | 29 October 2021 |
| CN | 116148183 | A | 23 May 2023 | None | | | |
| CN | 115343583 | A | 15 November 2022 | None | | | |
| CN | 1952646 | A | 25 April 2007 | CN | 100480678 | C | 22 April 2009 |
| CN | 111122442 | A | 08 May 2020 | CN | 209542428 | U | 25 October 2019 |
| US | 2018011007 | A1 | 11 January 2018 | EP | 3273152 | A1 | 24 January 2018 |
| | | | | EP | 3270045 | A1 | 17 January 2018 |
| | | | | US | 10634606 | B2 | 28 April 2020 |
| | | | | EP | 3270045 | B1 | 07 June 2023 |
| | | | | EP | 3270045 | C0 | 07 June 2023 |

Form PCT/ISA/210 (patent family annex) (July 2022)